# EUROPÄISCHE PATENTSCHRIFT

(11) **EP 0 558 165 B1**
(45) Veröffentlichungstag und Bekanntmachung des Hinweises auf die Patenterteilung: **27.03.1996**
(21) Anmeldenummer: 93250037.4
(22) Anmeldetag: 29.01.1993
(51) Int. Cl.: H02G 5/02

(54) **Stromschienenanordnung mit einer hammerkopfförmigen Nut**
Bus-bar arrangement with hammer-head shaped groove
Dispositif à barres conductrices avec une rainure en forme de tête de marteau

(30) Priorität: 28.02.1992 DE 4206674
(43) Veröffentlichungstag der Anmeldung: 01.09.1993
(73) Patentinhaber: SIEMENS AKTIENGESELLSCHAFT, D-80333 München (DE)
(72) Erfinder: Genzel, Rolf - Günter, W-6129 Lützelbach (DE)

(56) Entgegenhaltungen:
- DE-A- 2 211 165
- DE-A- 3 921 665
- US-A- 3 509 514

## Beschreibung

Die Erfindung betrifft eine Stromschienenanordnung, bestehend aus wenigstens einer profilierten Stromschiene mit einer im Querschnitt hammerkopfförmigen Nut für den Eingriff eines zum Befestigen eines weiterführenden Leiters dienenden Spannelementes und mit beidseitig der Öffnung der Nut angeordneten Auflageflächen für den weiterführenden Leiter die winklig zu einer für die Befestigung der Stromschiene an einem isolierenden Träger vorgesehenen Befestigungsfläche der Stromschiene angeordnet sind, wobei wenigstens eine der Auflageflächen für den weiter führenden Leiter Bestandteil eines im Querschnitt rechteckig profilierten Steges ist.

Eine solche Stromschienenanordnung ist durch die DE-A-39 21 665 bekannt geworden. Das dort beschriebene Stromschienenprofil weist insgesamt drei hammerkopfförmige Nuten sowie im Bedarfsfall noch eine rechteckförmige Nut auf. Auf diese Weise stehen für alle vorkommenden Anschluß- und Befestigungsaufgaben geeignete Bereich zur Verfügung. Die weiterführende Leiter können dabei Schienenleiter oder mit Kabeln oder Leitungen in fester Verbidung stehende Kabelschuhe oder Klemmen sein. Sofern die gestellten Aufgaben vielseitig sind und die Eigenschaften der beschriebenen Profilform dementsprechend ausgeschröpft werden, ist der relativ hohe Aufwand für die Herstellung der Profile gerechtfertigt. Die Erfindung geht demgegenüber davon aus, daß die am häufigsten auftretenden Aufgaben einfacherer Art sind und daher eine hierfür geeignete Stromschienenanordnung geschaffen werden soll, die ansonsten ähnlich gute Gebrauchseigenschaften wie die bekannte Stromschienenanordnung besitzt.

Gemäß der Erfindung wir diese Aufgabe dadurch gelöst, daß
- die Stromschiene nur eine hammerkopfförmige Nut aufweist und
- ein sich bezüglich der hammerkopfförmigen Nut einseitig erstreckender, mit Durchtrittsöffnungen für Befestigungselemente versehener und die Befestigungsfläche aufweisender Tragsteg auf der Stromschiene angeordnet ist.

Es zeigt sich, daß trotz wesentlich vereinfachter und daher leichter herstellbarer Profilform sowie geringeren Aufwandes an Material die Anbringung der geforderten Leitungsabzweige und Anschlüsse möglich ist. Ebenso ist eine Vergrößerung des Leitungsquerschnittes durch eine zusätzliche Stromschiene leicht möglich. Diese läßt sich auf den Tragsteg auflegen und mit den ohnehin für die Befestigung an dem isolierede Träger vorgesehenen Elementen befestigen.

Es erweist sich als vorteilhaft, wenn der rechteckig profilierte Steg an derselben Seite der Stromschiene wie der Tragsteg angeordnet ist. Er ragt dann nämlich in den Raum, der für die Befestigung der Stromschiene und gegebenenfalls einer zusätzlichen, zur Verstärkung des Leiterquerschnittes vorgesehenen Schiene benötigt wird, ohne die Gesamtabmessungen zu vergrößern.

Der erwähnte rechteckig profilierte Steg kann eine zum Aufsetzen einer Reiterklemme geeignete Dicke und Ausladung besitzen. Da die hammerkopfförmige Nut der Regel nicht auf ihrer gesamten Länge mit abgehenden Schienen belegt ist, sind genügend Zwischenräume vorhanden, in denen Reiterklemmen für Abgänge mit geringerem Querschnitt angebracht werden können.

Der Tragsteg der Stromschiene kann einen abgerundeten Überfangsbereich aufweisen, der sich zwischen der Befestigungsfläche des Tragsteges und einem die hammerkopfförmige Nut enthaltenden Abschnitt der Stromschiene befindet. Hierdurch entsteht eine Hinterschneidung des Profils, die zur Positionierung der Stromschiene auf ihrem Träger und zur Abstützung dienen kann. Dies ist beispielsweise in der Weise günstig nutzbar, daß der abgerundete Übergangsbereich in eine dem Tragsteg zugewandte Wandung der hammerkopfförmigen Nut übergehend angeordnet ist. Ferner kann der isolierende Träger an seiner für die Auflage der Stromschiene vorgesehenen Oberseite eine dem abgerundeten Übergangsbereich angepaßte Schulter besitzen. Diese greift in die erwähnte Hinterschneidung ein und bildet einen abstützenden Anschlag für die Stromschiene.

Die Erfindung wird im folgenden anhand der in den Figuren dargestellten Ausführungsbeispiele näher erläutert.

Die Figur 1 zeigt eine dreiphasige Sammelschienenanordnung im Profil.

In der Figur 2 ist eine der Stromschienen gemäß der Figur 1 mit Beispielen für Schienen- und Kabelanschlüsse in der Draufsicht dargestellt.

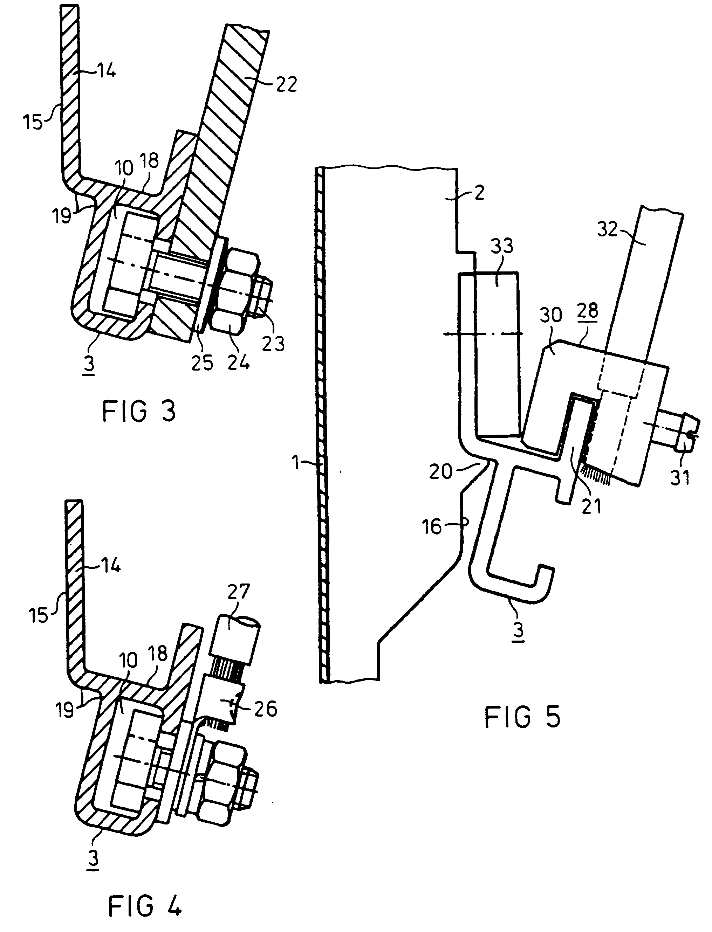

Einzelheiten eines Schienen- und eines Kabelanschlusses sowie eines Anschlusses mit Reiterklemme zeigen die Figuren 3, 4 und 5.

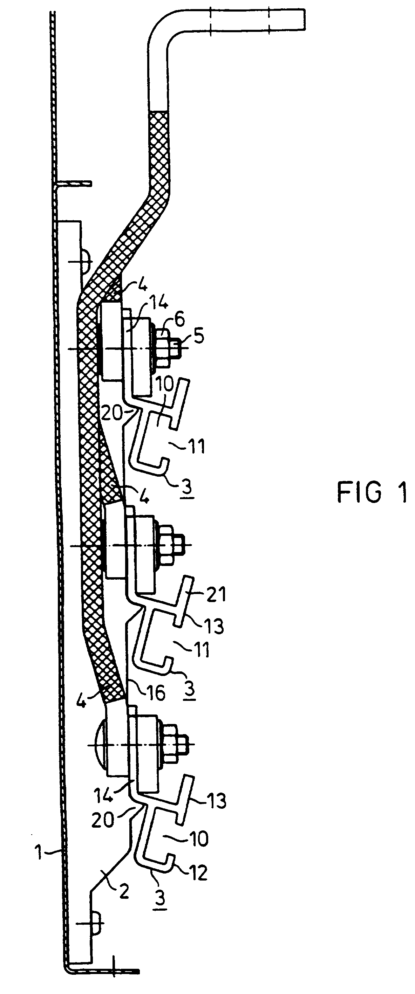

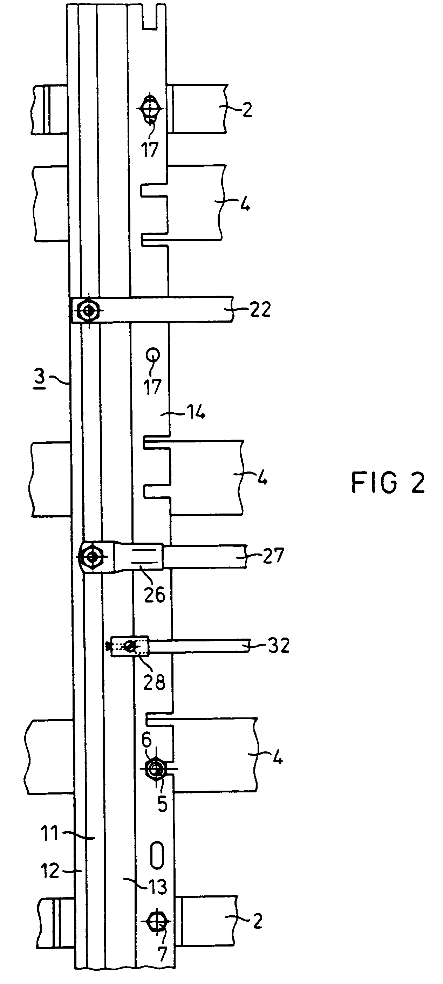

Die Figur 1 zeigt eine Seitenwand 1 eines Schaltschrankes oder Anlagengerüstes und einen daran befestigten isolierenden Träger 2. Auf dem Träger 2 sind parallel zueinander drei Stromschienen 3 befestigt, die durch je eine teilisolierte Speiseschiene 4 mit einer zugehörigen, in der Figur 1 nicht gezeigten einspeisenden Sammelschiene verbunden sind. Die Speiseschienen 4 erstrecken sich in den Zwischenräumen der Träger 2, die in geeigneten Abständen an der Seitenwand 1 angebracht sind, um die Schienenanordnung zuverlässig abzustützen. In der Figur 1 gezeigte Schrauben 5 und Muttern 6 dienen zur Verbindung der Speiseschienen 4 und der Stromschienen 2. Sie verdecken in der Figur 1 mit den Schrauben 5 fluchtende Schrauben 7, mit denen die Stromschienen 2 auf den Trägern 2 befestigt sind. In der Figur 2 sind sowohl die Schrauben 5 als auch die Schrauben 7 erkennbar.

Die Stromschienen 2 sind so profiliert, daß eine hammerkopfförmige Nut 10 mit einer Öffnung 11 gebildet ist, zu deren beiden Seiten sich je eine Auflagefläche 12 bzw. 13 für einen weiterführenden Leiter befindet. Im folgenden wird die hammerkopfförmige Nut kurz als "Nut 10" bezeichnet. Die Auflageflächen 12 und 13 liegen in einer Ebene, die winklig zu einem Tragsteg 14 steht, der mit einer Befestigungsfläche 15 (Figur 3) auf einer für die Befestigung der Stromschiene 3 vorgesehenen Oberseite 16 des Trägers 2 aufliegt. Die Winkelstellung ist dabei so gewählt, daß die Auflageflächen 12 und 13 von der Frontseite des Schaltschrankes her besser zugägnlich sind, als dies bei paralleler Lage der Auflageflächen 12 und 13 zu der Seitenwand der Fall wäre. Die Frontseite des Schaltschrankes entspricht dabei dem unteren Teile der Figur 1.

Der erwähnte Tragsteg 14 ist gemäß der Figur 2 in gleichmäßiger Teilung mit Durchtrittsöffnungen 17 für die die in der Figur 1 sichtbaren Schrauben 7 versehen. Dementsprechend werden die Träger 2 in Abständen an der Seitenwand 1 angebracht, die mit dem Teilungsmaß der Durchtrittsöffnungen 17 korrespondieren.

Wie näher den Figuren 3, 4 und 5 zu entnehmen ist, weist das Profil der Stromschienen 3 in allen Bereichen etwa gleiche Wandstärke auf. Diese ist zweckmäßig im Hinblick auf einen gewünschten Nennstrom und eine erforderliche mechanische Festigkeit gewählt. Das Profil ist im wesentlichen in einen etwa C-förmigen, die Nut 10 bildenden Bereich sowie den Tragsteg 14 gegliedert, der von der einen, dem Tragsteg 14 zugewandten Seitenwand 18 der Nut 10 (Figur 3) ausgeht. Dabei erfolgt der Übergang unter Einfügung eines abgerundeten Übergangsbereiches 19. Durch die Winkelstellung der Nut 10 gegenüber dem Tragsteg 14 entsteht eine Hinterschneidung, die für den Eingriff einer Schulter 20 des Trägers 2 vorgesehen ist (Figur 1). Wie man ferner erkennt, ist die Form des Profils so gewählt, daß zwischen der Vorderkante der Stromschiene 3 und der Oberseite 16 des Trägers 2 ein gewisser Abstand verbleibt.

Die Auflagefläche 13 der Stromschiene 2 wird nicht nur durch einen der Schenkel der C-Form der Nut 10 gebildet, sondern ist durch einen rechteckig profilierten Steg 21 erweitert, der sich nach derselben Seite wie der Tragsteg 14 erstreckt. Der Steg 21 dient zur Anbringung von Klemmen, wie nocht gezeigt wird. Die Dicke des Steges 21 kann abweichend von der Wanddicke des Profils der Stromschiene 3 gewählt sein, um handelsübliche Reiterklemmen verwenden zu können. Ebenso kann die Ausladung des Steges seitwärts der Seitenwand 18 der Nut 10 entsprechend dem zu verwendenden Typ einer Reiterklemme bemessen sein.

In der Figur 2 sind bereits Beispiele für weiterführende Leiter gezeigt, und zwar ein Schienenleiter 22, ein Kabelschuh 26 und eine Reiterklemme 28. Einzelheiten zeigen die Figuren 3, 4 und 5.

Zunächst wird die Benutzung der Nut 10 zur Befestigung abgehender Schienenleiter anhand der Figur 3 erläutert. Ein Schienenleiter 22 liegt auf den Auflageflächen 12 und 13 auf und besitzt ein Loch für den Durchtritt des Schaftes einer Hammerkopfschraube 23, die in die Nut 10 an einer beliebigen Stelle einsetzbar und bis zu einer gewünschten Stelle verschiebbar ist. Eine Mutter 24 und eine Scheibe 25 sorgen in bekannter Weise für eine mechanisch feste und elektrisch sichere Verbindung.

Sinngemäß die gleiche Anordnung wie in der Figur 3 ist in der Figur 4 für einen Kabelschuh 26 gezeigt, der am Ende eines Kabels 27 angebracht ist.

In der Figur 5 ist als weitere Möglichkeit für den Anschluß eines Leiters an die Stromschienen 3 eine Reiterklemme 28 gezeigt. Diese umgreift mit ihrem Fußteil 30 den außenliegenden Abschnitt des Steges 21 und wird durch Anziehen einer Klemmschraube 31 befestigt. Reiterklemmen eignen sich besonders für den Anschluß von Leitern mit einerm Querschnitt, der geringer als der von Schienen oder Kabeln ist. Als Beispiel ist eine isolierte Leitung 32 gezeigt.

### Bezugszeichenliste

- 1 =: Seitenwand eines Schaltschrankes
- 2 =: isolierender Träger für Sammelschienen
- 3 =: profilierte Stromschiene
- 4 =: Speiseschiene für Stromschiene
- 5 =: Schraube zur Verbindung von Strom- und Speiseschiene
- 6 =: Mutter für Schraube 5
- 7 =: Schraube zur Befestigung der Stromschienen
- 10 =: hammerkopfförmige Nut in der Stromschiene 3
- 11 =: Öffnung der hammerkopfförmigen Nut
- 12 =: Auflagefläche seitlich der Öffnung 11
- 13 =: (weitere) Auflagefläche seitlich der Öffnung 11
- 14 =: Tragsteg der Stromschiene 3
- 15 =: Befestigungsfläche am Tragsteg 14
- 16 =: Oberseite des Trägers 2
- 17 =: Durchtrittsöffnung im Tragsteg 14 für Schraube 7
- 18 =: Seitenwand der hammerkopfförmigen Nut 10
- 19 =: abgerundeter Übergangsbereich am Tragsteg 14
- 20 =: Schulter am Träger 2
- 21 =: rechteckig profilierter Steg der Stromschiene 3
- 22 =: Schienenleiter
- 23 =: Hammerkopfschraube
- 24 =: Mutter für Hammerkopfschraube 22
- 25 =: Scheibe für Mutter 23
- 26 =: Kabelschuh
- 27 =: Kabel am Kabelschuh 26
- 28 =: Reiterklemme
- 30 =: Fußteil der Reiterklemme 28
- 31 =: Klemmschraube der Reiterklemme 26
- 32 =: Leiter an der Reiterklemme 28
- 33 =: zusätzlicher Leiter (Verstärkungsschiene)

## Patentansprüche

1. Stromschienenanordnung, bestehend aus wenigstens einer profilierten Stromschiene (3) mit einer im Querschnitt hammerkopfförmigen Nut (10) für den Eingriff eines zum Befestigen eines weiterführenden Leiters (22, 26, 27) dienenden Spannelementes (23) und mit beidseitig der Öffnung (11) der Nut (10) angeordneten Auflageflächen (12, 13) für den weiterführenden Leiter (22, 26, 27), die winklig zu einer für die Befestigung der Stromschiene (3) an einem isolierenden Träger (2) vorgesehenen Befestigungsfläche (15) der Stromschiene (3) angeordnet sind, wobei wenigstens eine der Auflageflächen (12, 13) für den weiterführenden Leiter (22, 26, 27) Bestandteil eines im Querschnitt rechteckig profilierten Steges (21) ist, **dadurch gekennzeichnet,** daß
- die Stromschiene (3) nur eine hammerkopfförmige Nut (10) aufweist und
- ein sich bezüglich der hammerkopfförmigen Nut (10) einseitig erstreckender, mit Durchtrittsöffnungen (17) für Befestigungselemente (7) versehener und die Befestigungsfläche (15) aufweisender Tragsteg (14) auf der Stromschiene (3) angeordnet ist.

2. Stromschienenanordnung nach Anspruch 1,
**dadurch gekennzeichnet,** daß der rechteckig profilierte Steg (21) an derselben Seite der Stromschiene (3) wie der Tragsteg (14) angeordnet ist.

3. Stromschienenanordnung nach Anspruch 1 oder 2,
**dadurch gekennzeichnet,** daß der rechteckig profilierte Steg (21) eine zum Aufsetzen einer Reiterklemme (28) geeignete Dicke und Ausladung besitzt.

4. Stromschienenanordnung nach Anspruch 1,
**dadurch gekennzeichnet,** daß der Tragsteg (14) einen abgerundeten Übergangsbereich (19) aufweist, der sich zwischen der Befestigungsfläche (15) des des Tragsteges (14) und einem die hammerkopfförmige Nut (10) enthaltenden Abschnitt der Stromschiene (3) befindet.

5. Stromschienenanordnung nach Anspruch 4,
**dadurch gekennzeichnet**, daß der abgerundete Übergangsbereich (19) in eine dem Tragsteg (14) zugewandte Wand (18) der hammerkopfförmigen Nut (10) übergehend angeordnet ist.

6. Stromschienenanordnung nach Anspruch 4 oder 5,
**dadurch gekennzeichnet**, daß der isolierende Träger (2) an seiner für die Auflage der Stromschiene (3) vorgesehenen Oberseite (16) eine dem abgerundeten Übergangsbereich (19) angepaßte Schulter (20) besitzt.

## Claims

1. A busbar arrangement comprising at least one profiled busbar (3) with a groove (10) having a hammer-head shaped cross section for the engagement of a clamping element (23) used for securing an extended conductor (22, 26, 27) and with bearing surfaces (12, 13) for the extended conductor (22, 26, 27), which are arranged either side of the groove opening (11) at an angle to a securing surface (15) of the busbar (3) provided for securing the busbar (3) to an insulating support (2), at least one of the bearing surfaces (12, 13) for the extended conductor (22, 26, 27) being part of a profiled web (21) having a rectangular profiled cross section, characterised in that the busbar (3) comprises only a single hammer-head shaped groove (10), and a support web (14) is arranged on the busbar (3), which extends on one side relative to the hammer-head shaped groove (10), is provided with through openings (17) for securing elements (7) and comprises the securing surface (15).

2. A busbar arrangement according to claim 1,
characterised in that the rectangular profiled web (21) is arranged on the same side of the busbar (3) as the support web (14).

3. A busbar arrangement according to claim 1 or 2,
characterised in that the rectangular profiled web (21) has a thickness and length suitable for fitting a saddle clamp (28).

4. A busbar arrangement according to claim 1,
characterised in that the support web (14) comprises a rounded transition region (19), which is located between the securing surface (15) of the support web (14) and a section of the busbar (3) comprising the hammer-head shaped groove (10).

5. A busbar arrangement according to claim 4,
characterised in that the rounded transition region (19) is arranged in a wall (18) of the hammer-head shaped groove (10) facing the support web (14).

6. A busbar arrangement according to claim 4 or 5,
characterised in that, on its surface (16) provided for bearing the busbar (3), the insulating support (2) comprises a shoulder (20) adapted to match the rounded transition region (19).

## Revendications

1. Dispositif à barres conductrices, constitué par au moins une barre conductrice (3) profilée ayant une rainure (10) en forme de tête de marteau en coupe transversale pour y engager un élément de blocage (23) servant à fixer un conducteur de départ (22, 26,27) et des surfaces d'appui (12,13) disposées des deux côtés de l'ouverture (11) de la rainure (10) et prévues pour les conducteurs de départ (22,26,27), qui sont disposés obliquement par rapport à une surface de fixation (15) de la barre conductrice (3) prévue sur un support isolant (2), au moins l'une des surfaces d'appui (12, 13) pour le conducteur de départ (22,26,27) faisant partie d'une réglette (21) profilée de forme rectangulaire en coupe transversale, caractérisé par le fait que
- la barre conductrice (3) possède une seule rainure (10) en forme de tête de marteau, et
- une réglette de support (14), qui s'étend d'un côté de la rainure (10) en forme de tête de marteau et est pourvue d'ouvertures de passage (17) pour les éléments de fixation (7) et porte la surface de fixation (15), est disposée sur la barre conductrice (3).

2. Dispositif à barres conductrices suivant la revendication 1, caractérisé par le fait que la réglette (21) profilée rectangulaire est disposée du même côté de la barre conductrice (3), que la réglette de support (14).

3. Dispositif à barres conductrices suivant la revendication 1 ou 2, caractérisé par le fait que la réglette (21) profilée rectangulaire possède une épaisseur et une disposition en porte-à-faux convenant pour le montage d'une pince formant curseur (28).

4. Dispositif à barres conductrices suivant la revendication 1, caractérisé par le fait que la réglette de support (14) a une partie de jonction (19) arrondie, qui est située entre la surface de fixation (15) de la réglette de support (14) et une partie, qui comporte la rainure (10) en forme de tête de marteau, de la barre conductrice (3) .

5. Dispositif à barres conductrices suivant la revendication 4, caractérisé par le fait que la partie de jonction (19) arrondie est disposée de manière à se transformer en une paroi (18), tournée vers la réglette de support (14), de la rainure (10) en forme de tête de marteau.

6. Dispositif à barres conductrices suivant la revendication 4 ou 5, caractérisé par le fait que le support isolant (2) possède, sur sa face supérieure (16), prévue pour l'appui de la barre conductrice (3), un épaulement (20) adapté à la partie de jonction (19) arrondie.
